# EUROPEAN PATENT APPLICATION

(11) **EP 4 166 947 A1**
(43) Date of publication of application: **19.04.2023**
(21) Application number: 21202880.7
(22) Date of filing: 15.10.2021
(51) Int. Cl.: G01N 35/00, G02B 21/24, G02B 21/36, G02B 21/34, B01L 9/00, G01N 35/04

(54) **DISTRIBUTED SLIDE SCANNING SYSTEM AND METHOD OF OPERATING A DISTRIBUTED SLIDE SCANNING SYSTEM**

(71) Applicant: PreciPoint GmbH, 85354 Freising (DE)
(72) Inventor: WILDNER, Ludwig, 85356 Freising (DE)
(74) Representative: Schmitt-Nilson Schraud Waibel Wohlfrom Patentanwälte Partnerschaft mbB

(57) **Abstract**

A distributed slide scanning system (2) includes: a plurality of digital microscopes (10), each of the plurality of digital microscopes (10) having a table (14) sized to hold at least one slide tray (50) and being configured to scan at least one microscope slide arranged in said at least one slide tray (50); a distributed slide tray storage system, including at least one slide tray input module (20), at least one slide tray output module (30), and at least one slide tray buffer module (40), with each of the at least one slide tray input module (20), the at least one slide tray output module (30), and the at least one slide tray buffer module (40) being capable of holding a plurality of slide trays (50); and a tray moving assembly (60), having a gripper (62) that is freely movable in three dimensions and that is configured to grab, move, and release an individual slide tray (50); wherein the plurality of digital microscopes (10), the at least one slide tray input module (20), the at least one slide tray output module (30), the at least one slide tray buffer module (40), and the tray moving assembly (60) are arranged in such a way that the tray moving assembly (60) is able to move the individual slide tray (50) between the plurality of digital microscopes (10), the at least one slide tray input module (20), the at least one slide tray output module (30), and the at least one slide tray buffer module (40).

## Description

The present invention is in the field of digital microscopy. In particular, the present invention is in the field of automated systems where microscopic samples are handled and scanned in an automated manner.

In the field of microscopy, various efforts have been made to digitalize workflows that were previously based on the use of analog microscopes. For example, instead of a pathologist looking at a sample through an analog microscope, it has become an option to scan the sample with a digital microscope and to allow the pathologist to evaluate the sample in the form of a digital image on a computer. In modern pathology laboratories, a large number of samples is looked at and evaluated. This has led to the development of automated slide scanning systems where microscope slides, containing the samples of interest, are distributed among a plurality of microscopes in an automated manner and are scanned at the plurality of microscopes in an automated, in particular parallel manner. While such approaches have led to performance gains in terms of microscopic sample throughput, the ease of handling, the reliability, and/or the throughput of such systems have not always been satisfactory.

Accordingly, it would be beneficial to provide a slide scanning system that provides for a high sample throughput, while allowing a highly reliable sample handling within the slide scanning system.

Exemplary embodiments of the invention include a distributed slide scanning system, comprising: a plurality of digital microscopes, each of the plurality of digital microscopes having a table sized to hold at least one slide tray and being configured to scan at least one microscope slide arranged in said at least one slide tray; a distributed slide tray storage system, comprising at least one slide tray input module, at least one slide tray output module, and at least one slide tray buffer module, with each of the at least one slide tray input module, the at least one slide tray output module, and the at least one slide tray buffer module being capable of holding a plurality of slide trays; and a tray moving assembly, having a gripper that is freely movable in three dimensions and that is configured to grab, move, and release an individual slide tray; wherein the plurality of digital microscopes, the at least one slide tray input module, the at least one slide tray output module, the at least one slide tray buffer module, and the tray moving assembly are arranged in such a way that the tray moving assembly is able to move the individual slide tray between the plurality of digital microscopes, the at least one slide tray input module, the at least one slide tray output module, and the at least one slide tray buffer module.

Exemplary embodiments of the invention allow for the provision of a slide scanning system that has a high system throughput, while handling the microscope samples in highly reliable manner. In particular, by operating all components of the slide scanning system on a slide tray level, a high scanning throughput and a highly reliable handling of microscope slides may be achieved at the same time. In exemplary embodiments of the invention, the slide tray may be a frame-like structure that is capable of holding a plurality of microscope slides, such as four microscope slides. As compared to previous approaches where the handling within the slide scanning system was done on a microscope slide level, the handling operations that involve relocations of the microscope slides between the individual components of the slide scanning system may be reduced by a factor of up to four due to the joint relocation of up to four microscope slides in one slide tray. In addition, as compared to handling microscopic samples on the microscope slide level, the slide trays provide a larger and more stable structure that can be handled by the gripper in a quicker and/or more robust manner. As compared to handling the microscopic samples on the microscope slide level, the gripping of slide trays may lead to less failed gripping operations and/or to less dropped microscope slides, thus contributing to a faster and more reliable sample handling.

The slide scanning system has a plurality of digital microscopes. In this way, the slide scanning system has distributed scanning capacities, in particular scanning capacities that are distributed among the plurality of digital microscopes. The slide scanning system is considered a distributed slide scanning system.

Each of the plurality of digital microscopes has a table sized to hold at least one slide tray. In this way, the microscope slides of the slide tray may be scanned in one operation, without having to re-position the slide tray on the table. Each of the plurality of digital microscopes may further have a digital camera, with the table being movable with respect to the digital camera and the digital camera being capable of taking successive images of different portions of the microscope slides. The plurality of digital microscopes may be controlled in a way to capture multiple images of the microscopes slides, to stich these images of portions of the microscope slides, and to output assembled scans of the microscopic samples contained in the microscope slides.

The distributed slide scanning system has a distributed slide tray storage system, comprising at least one slide tray input module, at least one slide tray output module, and at least one slide tray buffer module. During operation of the distributed slide scanning system, slide trays may be freely moved between the at least one slide tray input module and the at least one slide tray output module and the at least one slide tray buffer module. This three-tiered system set up provides for a high degree of flexibility in scheduling the handling operations of the tray moving assembly. In particular, the storing capacities of the at least one slide tray buffer module may allow for adapting the tray moving operations of the tray moving assembly to the scanning capacities of the plurality of digital microscopes and to the current levels of capacity utilisation in the at least one slide tray input module and the at least one slide tray output module in a particularly beneficial manner.

The term slide tray refers to a support structure / holding structure for a plurality of microscope slides. While a plurality of microscope slides may be arranged on a particular slide tray, any number of between 0 microscope slides and the maximum capacity of microscope slides of the slide tray may be present on the slide tray at any given point in time. The slide tray may in particular be configured to hold between 2 and 8 microscope slides, in particular in between 3 and 6 microscope slides, further in particular exactly 4 or 5 microscope slides.

The slide tray may have transparent portions or cut out portions at those positions of the slide tray where the sample portion of a microscope slide will come to lie. The plurality of digital microscopes may be in a position to excite the samples, contained in the microscope slides, in a variety of different manners. One particular example is the execution of transmitted light microscopy operations. The slide tray may form a plurality of frames around a plurality of microscope slides, when arranged on the slide tray.

The distributed slide scanning system comprises a tray moving assembly with a gripper that is freely movable in three dimensions and that is is configured to grab, move and release an individual slide tray. In particular, the gripper may have built-in functionality to grab and release individual slide tray. The gripping functionality may be embodied via two gripping arms or in any other suitable manner. The tray moving assembly allows for the gripper to be freely moved in three dimensions, which in turn allows for an individual slide tray, which has been grabbed by the gripper, to be moved in three dimensions together with the gripper. The gripper may be the tool that allows for grabbing and releasing the individual slide tray, while the remainder of the tray moving assembly may be configured to move said tool together with the individual slide tray in three dimensions. The expression of moving an individual slide tray within the distributed slide scanning system may also be referred to as relocating the individual slide tray within the distributed slide scanning system. It can also be said that the tray moving assembly is capable of disposing the slide trays within the distributed slide scanning system to desired locations.

According to a further embodiment, the tray moving assembly comprises a rail assembly, wherein the gripper is mounted to the rail assembly and wherein the gripper is freely movable in three dimensions via the rail assembly. In a particular embodiment, the gripper is mounted to a first rail and is movable along the first rail in a first dimension. The first rail may be mounted to a second rail, which may be substantially orthogonal to the first rail, and may be movable along the second rail in a second dimension, substantially orthogonal to the first dimension. The second rail may be mounted to two third rails, which may be substantially orthogonal to the first rail and to the second rail, and may be movable along the two third rails in a third dimension, substantially orthogonal to the first dimension and the second dimension. In this way, the gripper may be freely movable via the rail assembly in a Cartesian coordinate system. The first rail and the two third rails may be arranged in a substantially horizontal manner, while the second rail may be arranged in a substantially vertical manner.

According to the further embodiment, the tray moving assembly comprises a robotic arm and the gripper is mounted to the robotic arm. In this way, the gripper is mounted to a support structure that has the inherent capability of enabling three-dimensional motions of the gripper. In this way, the high reliability and the high throughput of the tray-based moving of samples may be combined with the high moving speed of a robotic arm, thus enhancing the throughput of the distributed slide scanning system even further.

According to a further embodiment, the robotic arm is arranged on a track in a movable manner. In particular, the robotic arm may be fixed on a cart or on a sled, arranged on a track. By providing the robotic arm on the track in a movable manner, the reach of the robotic arm may be extended and overall larger slide scanning systems may be enabled. The track may in particular be a non-switched track, further in particular a substantially linear track. In this way, the moving of the robotic arm along the track may be carried out in a in a particularly reliable and fast manner. It is also possible that the track has other geometries, e.g. the track may also be a substantially circular track or a substantially oval track or may have the shape of a portion of a circle or a portion of an oval. The track may in particular be arranged in a substantially horizontal plane.

According a further embodiment, the robotic arm is arranged on a telescope support. In this way, the reach of the robotic arm may also be extended and overall larger slide scanning systems may be enabled. The telescope support may in particular have a substantially vertical direction of extension.

According to a further embodiment, the distributed slide scanning system has a plurality of unit shelf spaces and the at least one slide tray input module, the at least one slide tray output module, and the at least one slide tray buffer module are each fitted into respective unit shelf spaces. In this way, a particularly high configuration and re-configuration flexibility may be achieved on a system level. Depending on the particular needs of a particular implementation, the number of unit shelf spaces and their layout as well as the numbers of slide tray input module(s), slide tray output module(s), and slide tray buffer module(s) may be adapted in a particularly convenient manner. In particular, the at least one slide tray input module, the at least one slide tray output module, and the at least one slide tray buffer module may all have a unit size, in particular a unit base area, and may have a standard mounting structure, such that these components may be freely distributed among the unit shelf spaces. The plurality of unit shelf spaces may in particular be a plurality of cubic unit shelf spaces.

According to a further embodiment, the plurality of the digital microscopes are each fitted into respective unit shelf spaces. In this way, the number and arrangement of the plurality of digital microscopes may be conveniently adapted to the needs of a particular system implementation. Also the plurality of digital microscopes may be arranged interchangeably with the slide tray input module(s), the slide tray output module(s), and the slide tray buffer module(s). Beneficial arrangements of the digital microscopes and the other components of the distributed slide scanning system may contribute to an efficient scheduling of slide tray moving operations by the tray moving assembly.

According to a further embodiment, the plurality of digital microscopes comprise at least two digital microscopes, in particular at least three digital microscopes, further in particular at least four digital microscopes, yet further in particular at least five digital microscopes. In particular, the plurality of the digital microscopes may comprise between 2 and 20 digital microscopes, in particular between 3 and 15 digital microscopes, further in particular between 4 and 12 digital microscopes, further in particular between 5 and 10 digital microscopes. It has been found that the given numbers of digital microscopes allow for a high system throughput, while still being well-manageable by a single gripper operating on the slide tray level.

According to a further embodiment, the at least one slide tray input module, the at least one slide tray output module, and the at least one slide tray buffer module may jointly have a capacity of holding between 200 slide trays and 5000 slide trays, in particular between 250 slide trays and 3500 slide trays. It has been found that the given storage capacities allow for a high throughput of the distributed slide scanning system, while still being well-manageable with a single gripper operating on the slide tray level.

According to a further embodiment, each of the at least one slide tray buffer module is capable of holding between 50 slide trays and 300 slide trays, in particular between 100 slide trays and 200 slide trays.

According to a further embodiment, the distributed slide scanning system has a system control unit, configured to coordinate the operations of the tray moving assembly and the plurality of digital microscopes, taking into account at least the number of slide trays in the at least one slide tray input module and the number of the slide trays in the at least one slide tray buffer module. The system control unit may in particular be coupled to the plurality of microscopes, to the tray moving assembly, to the at least one slide tray input module, to the at least one slide tray output module, and to the at least one slide tray buffer module. The system control unit may form a top level control layer. It may in particular ensure that a high scanning throughput is achieved, while balancing the storage capacities among the at least one slide tray input module, the at least one slide tray output module, and the at least one slide tray buffer module. The system control unit may for example be a dedicated computer or a dedicated software application on a computer / server and may form a high level interface for a user of the distributed slide scanning system.

According to a further embodiment, each of the plurality of microscopes, the at least one slide tray input module, the at least one slide tray output module, and the at least one slide tray buffer module has a component control unit, coupled to the system control unit, wherein the plurality of microscopes, the at least one slide tray input module, the at least one slide tray output module, and the at least one slide tray buffer module are configured to exchange status messages with the system control unit and/or among each other. By providing component control units in addition to the system control unit, a multi-layered control approach may be implemented. This multi-layered control approach may allow for an efficient distribution of control tasks between localized control units and the global system control unit. The component control units may be dedicated computers or may be software applications, dedicated to the component in question and running on a computer / server. It is also possible that some of the component control units are integrated with the respective components, such as in the form of micro-processors. This may in particular be the case for those components where highly recurring tasks are implemented, such as the task of sensing the occupancy status of a slide tray buffer module and communicating said occupancy status to the system control unit.

According to a further embodiment, the distributed slide scanning system is configured to place slide trays in the at least one slide tray output module in a sorted manner. In this way, batches of slide trays may be grouped in the at least one slide tray output module, and a user of the distributed slide scanning system may remove associated slide trays in a joint manner. The distributed slide scanning system may in particular be configured to organize slide trays in the at least one slide tray output module in at least one of patient-specific, examination-specific and/or case-specific slide tray groups. In this way, a meaningful grouping of the slide trays, taking into account the underlying purpose of the sample scan, may be achieved. This may in particular be beneficial in applications where the distributed slide scanning system is jointly used by a plurality of users that work in different locations and use the distributed slide scanning system in a remote manner.

According to a further embodiment, the at least one slide tray input module is configured to carry out microscope slide pre-scans. In particular, such microscope slide pre-scans may be carried out with a digital camera with comparably low resolution and/or without optical magnification. In this way, it is possible to carry out said microscope slide pre-scans in a very quick manner. In a particular embodiment, the at least one slide tray input module is configured to make a determination whether a particular microscope slide is to be scanned and/or which portions of a particular microscope slide are to be scanned. By making such a determination in advance of the scanning by one of the plurality of digital microscopes, the total load on the plurality of digital microscopes may be reduced and an overall higher throughput may be achieved with the distributed slide scanning system. In a particular embodiment, the at least one slide tray input module is configured to make said determination via artificial intelligence. The artificial intelligence may in particular be trained to make a determination whether a particular microscope slide contains meaningful information and/or which portions of a particular microscope slide contain meaningful information.

According to a further embodiment, the distributed slide scanning system further comprises an external data connection and is configured to export scans of microscope slides via the external data connection. In this way, the distributed slide scanning system may be provided at substantially any arbitrary location, with the external data connection allowing for the scans of the microscopic samples to be sent out for further evaluation.

According to a further embodiment, the distributed slide scanning system is configured to receive a viewing command for a particular microscope slide via the external data connection and is configured to place a particular slide tray, holding the particular microscope slide, on the table of one of the plurality of digital microscopes and transmit a live view of the particular microscope slide via the external data connection. In this way, while potentially being remote from the user of the distributed slide scanning system, the distributed slide scanning system may still be able to provide real-time access or almost real-time access to the microscope slides within the distributed slide scanning system.

According to a further embodiment, the distributed slide scanning system is configured to re-scan a particular microscope slide or a portion of a particular microscope slide, with the re-scan of the particular microscope slide or the portion of the particular microscope slide being carried out with an adapted magnification and/or an adapted focus. In this way, the distributed slide scanning system may react to unsatisfying scan results and may provide additional scans in response to according re-scan commands. With the distributed slide scanning system having at least one slide tray buffer module, microscope slides may be kept within the distributed slide scanning system for some period of time, e.g. until the quality of an inital scan is evaluated. This in turn may allow for a quick and easy access for re-scanning purposes. The adapted magnification and/or the adapted focus may be based on a user command or may be based on a machine-based evaluation of the previous scan, such as an evaluation of the previous scan via artificial intelligence. In this way, an automated process for re-scanning may be provided, contributing to a high quality of microscope slide scans, while not affecting overall system throughput in an unduly limiting manner.

According to a further embodiment, at least one of the plurality of digital microscopes comprises at least one microscope-side magnet, arranged at the table and configured to pull at least one magnetic or ferromagnetic element within a slide tray into a predefined positon on the table. Via the help of the magnetic interaction between the at least one microscope-side magnet and the at least one magnetic or ferromagnetic element within the slide tray, the positioning accuracy of the slide trays on the table of the digital microscope may improved. Also, the positioning requirements for the tray moving assembly may be loosened somewhat. This may lead to a quicker moving of slide trays between the components of the distributed slide scanning system, contributing to an overall very high system throughput.

According to a further embodiment, one or all or any subset of the at least one slide tray input module, the at least one slide tray output module, and the at least one slide tray buffer module comprise(s) at least one module-side magnet, configured to pull said at least one magnetic or ferromagnetic element within a slide into a predefined position in the respective module. In this way, the positioning accuracy of the slide trays and/or the positioning speed of the slide trays within the at least one slide tray input module and/or the at least one slide tray output module and/or the at least one slide tray buffer module may be enhanced.

Exemplary embodiments of the invention further include a combination of a distributed slide scanning system, as described in any of the embodiments above, and a magnetic or ferromagnetic slide tray. The additional features, modifications and effects, as described above with respect to the distributed slide scanning system, apply to the combination of the distributed slide scanning system and the magnetic or ferromagnetic slide tray in an analagous manner.

According to a further embodiment, the magnetic or ferromagnetic slide tray has at least one magnetic or ferromagnetic element embedded into the slide tray.

According to a further embodiment, the magnetic or ferromagnetic slide tray is made by additive manufacturing or by injection molding around the at least one magnetic or ferromagnetic element. The at least one magnetic or ferromagnetic element may be provided in the form of a magnetic or ferromagnetic powder or in the form of magnetic or ferromagnetic granules or in any other suitable form.

According to a further embodiment, the magmatic or ferromagnetic slide tray comprises at least one cavity, into which the at least one magnetic or ferromagnetic element is fitted. In particular, the at least one magnetic or ferromagnetic may be press-fit into the at least one cavity during production.

Exemplary embodiments of the invention further include a method of operating a distributed slide scanning system, as described in any of the embodiments above, the method comprising one or any subset or all of the following: grabbing an individual slide tray from a slide tray input module and placing the individual slide tray on the table of a particular one of the plurality of digital microscopes or into a particular one of the at least one slide tray buffer module; grabbing an individual slide tray from the table of a particular one of the plurality of digital microscopes and placing the individual slide tray into a particular one of the at least one slide tray buffer module; grabbing an individual slide tray from a particular one of the at least one slide tray buffer module and placing the individual slide tray on the table of a particular one of the plurality of digital microscopes; and grabbing an individual slide tray from the table of a particular one of the plurality of digital microscopes or from a particular one of the at least one slide tray buffer module and placing the individual slide tray into a particular one of the at least one slide tray output module. The additional features, modifications and effects, as described above with respect to the distributed slide scanning system, apply to the method of operating a distributed slide scanning system in an analagous manner.

Further exemplary embodiments of the invention are described with respect to the accompanying drawings, wherein:
Figure 1 shows a distributed slide scanning system in accordance with an exemplary embodiment of the invention in a perspective view;
Figure 2 shows a digital microscope, as may be part of a distributed slide scanning system in accordance with exemplary embodiments of the invention, in a perspective view;
Figure 3 shows a slide tray buffer module, as may be part of a distributed slide scanning system in accordance with exemplary embodiments of the invention, in a perspective view;
Figure 4 shows an exemplary slide tray, as may be handled within a distributed slide scanning system in accordance with exemplary embodiments of the invention, in a perspective view;
Figure 5 shows a tray moving assembly, as may be part of a distributed slide scanning system in accordance with exemplary embodiments of the invention, in a perspective view;
Figure 6 shows another tray moving assembly, as may be part of a distributed slide scanning system in accordance with exemplary embodiments of the invention, in a perspective view;
Figure 7 shows yet another tray moving assembly, as may be part of a distributed slide scanning system in accordance with exemplary embodiments of the invention, in a perspective view; and
Figure 8 shows yet another tray moving assembly, as may be part of a distributed slide scanning system in accordance with exemplary embodiments of the invention, in a perspective view.

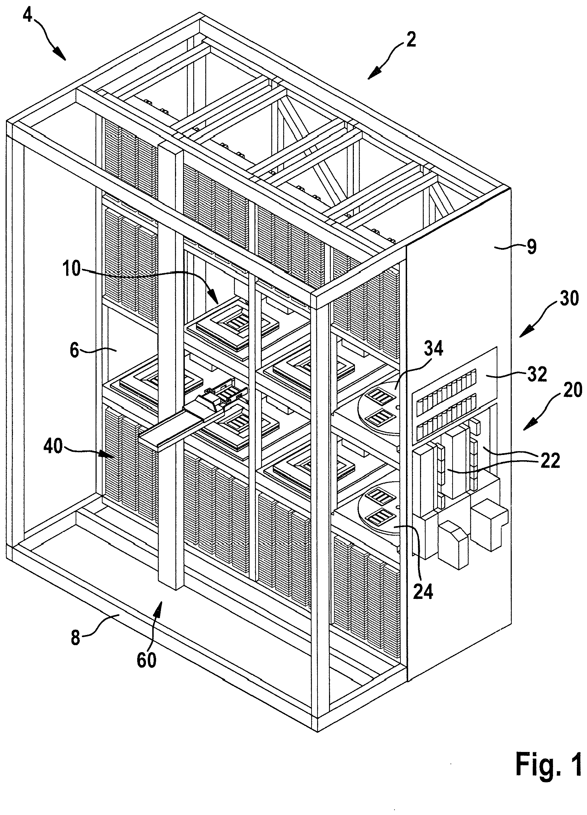

Figure 1 shows a distributed slide scanning system 2 in accordance with an exemplary embodiment of the invention in a perspective view. The distributed slide scanning system 2 of Figure 1 has multiple components as will be described below, which are arranged in and are, directly or indirectly, mounted to an outer frame 8. The outer frame 8 is a substantially cubic frame that provides stability to the distributed slide scanning system 2.

The distributed slide scanning system 2 comprises a shelf 4. The shelf 4 has sixteen unit shelf spaces 6. Each of the sixteen unit shelf spaces 6 has a substantially cubic design. In the sixteen unit shelf spaces 6, various components of the distributed slide scanning system 2 are arranged.

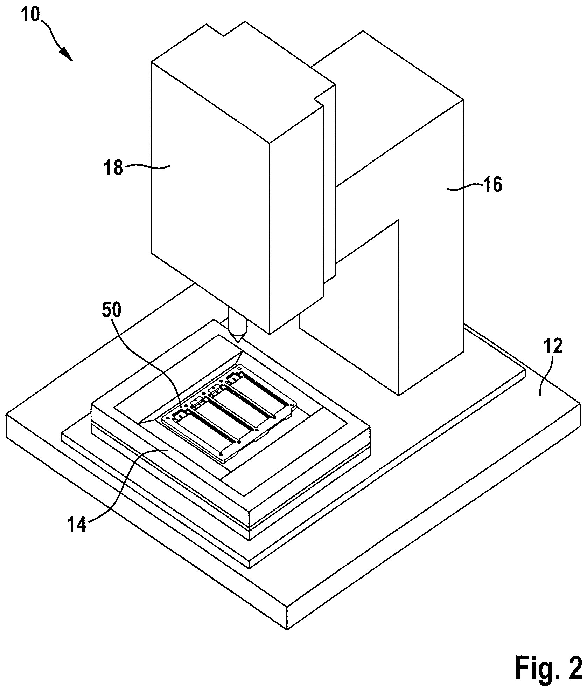

The distributed slide scanning system 2 of Figure 1 comprises five digital microscopes 10. The five digital microscopes 10 are arranged in five unit shelf spaces 6 of the shelf 4. In the exemplary embodiment of Figure 1, the five digital microscopes 10 are of identical design. However, it is also possible that some or all of the digital microscopes have different designs and/or have different sample scanning functionalities. More details of the digital microscopes 10 will be described below with respect to Figure 2.

Figure 2 shows a digital microscope 10, as may be used in a distributed slide scanning system in accordance with exemplary embodiments of the invention, in a perspective view. In particular, the digital microscope 10 of Figure 2 may be used for any of the five digital microscopes 10 contained in the distributed slide scanning system 2 of Figure 1.

The digital microscope 10 of Figure 2 has a base 12. The base 12 is sized to fit into a unit shelf space 6 of the shelf 4 of the distributed slide scanning system 2 of Figure 1. The base 12 may have a standard mounting structure that allows for the digital microscope 10 to be fixed in position with respect to the unit shelf space 6 and, thus, with respect to the remainder of the distributed slide scanning system 2.

The digital microscope 10 comprises a table 14 that is arranged substantially parallel to the base 12. The table 14 is movable in a horizontal plane, herein also referred to as x-y-plane. The table 14 is sized to hold a slide tray 50, wherein the slide tray 50 is a holding structure for a plurality of microscope slides. In the examplary embodiment of Figures 1 and 2, the slide tray 50 is configured for holding a maximum of 4 microscope slides. Between the base 12 and the table 14, there are arranged a table drive assembly, which is configured for moving the table 14 in the x-y-plane, and an illumination assembly, which are blocked from view in the viewing direction of Figure 2. With the illumination assembly being below the the table 14, the digital microscope 10 may operate as a transmitted light microscope.

The digital microscope 10 further comprises a support arm 16 and an optics and camera housing 18. The support arm 16 is shaped to support the optics and camera housing 18, such that the optics and camera housing 18 hovers over the table 14. The optics and camera housing 18 houses various optical components. In particular, the optics and camera housing 18 houses a digital camera and an optical system, which in turn may have a tube objective and a microscope objective and, potentially, further optical components.

The digital microscope 10 is configured to scan one or more microscope slides, arranged in the slide tray 50. In particular, the table 14 may move along a predetermined pattern in the x-y-plane, and the digital camera of the digital microscope 10 may take many images of sections of the microscope slide in question. The many images of sections of the sample may be assembled, e.g. via a stitching operation, and may be provided to an external user via an external data connection. The external data connection is not shown in the Figures, but may be provided at any convenient location in the distributed slide scanning system 2.

Turning back to Figure 1, the distributed slide scanning system 2 further comprises a slide tray input module 20. The slide tray input module 20 is fitted into a unit shelf space 6 and is accessible from outside of the distributed slide scanning system 2 via a side face 9 of the distributed slide scanning system 2.

The slide tray input module 20 has two slots 22 in the side face 9 of the distributed slide scanning system 2, where cartridges of slide trays may be introduced. The slots 22 and their configuration for receiving slide tray cartridges establish an input gate for the provision of the slide trays to the distributed slide scanning system 2.

The slide tray input module 20 further comprises a turntable 24. The turntable 24 has four slide tray holding positions. From the cartridges of slide trays, when inserted into the slots 22, individual slide trays are conveyed to the slide tray holding positions of the turntable 24 via a suitable conveyance mechanism.

When positioned on the turntable 24, a comparably low resolution digital camera takes images of the microscope slides of the slide tray. These images may also be referred to a pre-scans of the microscope slides. In particular, the digital camera may for example take one image per microscope slide. The slide tray input module 20 or another suitable entity in the distributed slide scanning system 2 may analyze the pre-scans and may make a determination whether the particular microscope slide is to be scanned and/or which portions of the particular microscope slide are to be scanned. This determination may be carried out via classical computer algorithms and/or by artificial intelligence.

The distributed slide scanning system 2 further comprises a slide tray output module 30. The slide tray output module 30 is fitted into a unit shelf space 6 of the shelf 4 of the distributed slide scanning system 2.

The slide tray output module 30 comprises a slide tray output container 32. The slide tray output container 32 can be inserted into and taken out of the slide tray output module 30 via the side face 9 of the distributed slide scanning system 2. Slide trays from within the distributed slide scanning system 2 may be placed into the slide tray output container 32 in a sorted manner. In particular, slide trays from within the distributed slide scanning system 2 may be origanized in the slide tray output container 32 in slide tray groups that belong to a particular patient and/or that belong to a particular examination and/or that belong to a particular case.

The slide tray output module 30 comprises a turntable 34. The turntable 34 has four slide tray holding positions. From the turntable 34, the slide trays may be conveyed into the slide tray output container 32 via a suitable conveyance mechanism.

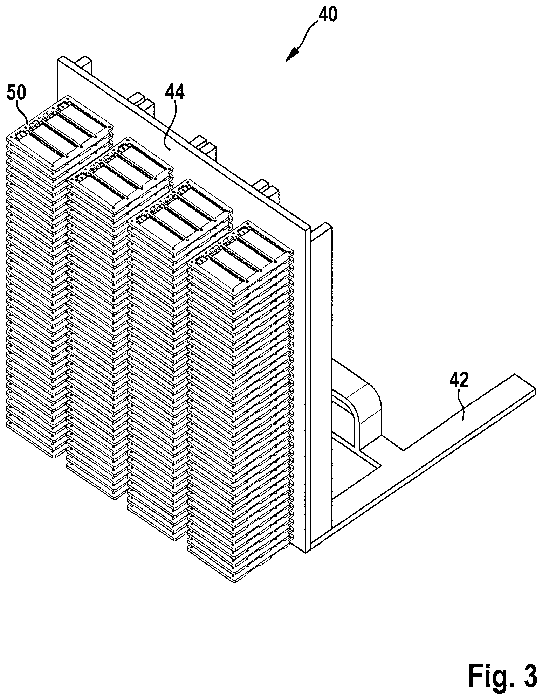

The distributed slide scanning system 2 comprises nine slide tray buffer modules 40. Each of the nine slide tray buffer modules 40 is arranged in a respective unit shelf space 6 of the shelf 4 of the distributed slide scanning system 2. The details of a slide tray buffer module 40 are described below with respect to Figure 3.

Figure 3 shows a slide tray buffer module 40, as may be part of a distributed slide scanning system in accordance with exemplary embodiments of the invention, in a perspective view. In particular, the slide tray buffer module 40 of Figure 3 may be used as any of the nine slide tray buffer modules 40 of the distributed slide scanning system 2 of Figure 1.

The slide tray buffer module 40 has a bar support 42. The bar support 42 is designed to fit into a unit shelf space 6 and has a standard mounting structure for fixing the slide tray buffer module 40 within the unit shelf space 6.

The slide tray buffer module 40 further comprises a slide tray holding wall 44. The slide tray holding wall 44 has a plurality of slits, into which slide trays may be inserted. In particular, an individual slide tray 50 may be inserted into a single slit in the slide tray holding wall 44 and may be supported by the slide tray holding wall 44 in a stable manner. Instead of being introduced into slits in the slide tray holding wall 44, the slide tray holding wall 44 may have a plurality of protrusions and individual slide trays 50 may be clamped between such protrusions for being held by the slide tray holding wall 44.

In the exemplary embodiment of Figure 3, a plurality of slide trays 50 are stored in the slide tray buffer module 40 in four slide tray columns. Each of the slide tray columns contains about forty slide trays 50. The slide trays 50 may be inserted into and taken out of the slide tray buffer module 40 in an individualized manner, as will be described in more detail below.

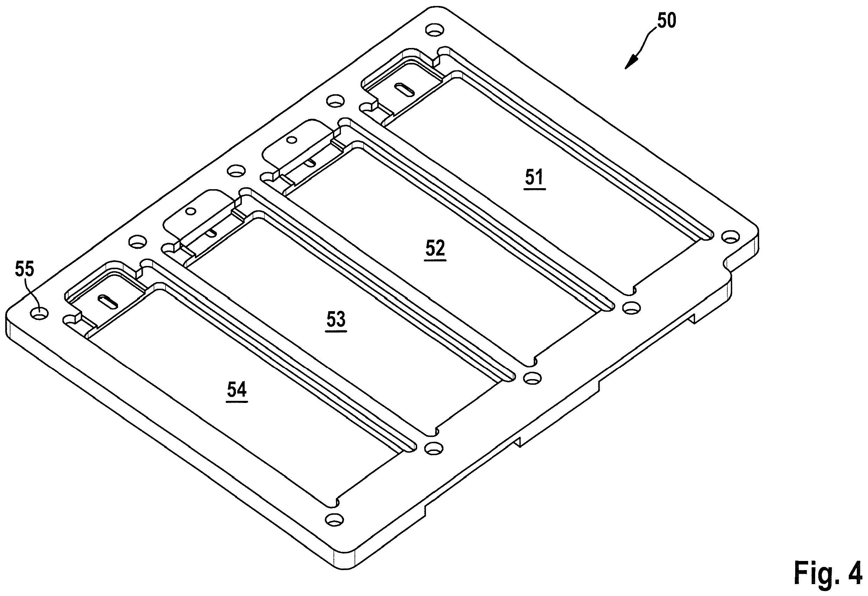

Figure 4 shows an exemplary slide tray 50 in an enlarged perspective view. The slide tray 50 of Figure 4 may be handled within a distributed slide scanning system in accordance with exemplary embodiments of the invention, in particular within the distributed slide scanning system 2 of Figure 1.

The slide tray 50 has four cut out portions 51, 52, 53, 54. Each of the four cut out portions 51, 52, 53, 54 is sized to receive and support a single microscope slide. The slide tray 50 provides a frame-like circumferential rest for a microscope slide around each of the four cut out portions 51, 52, 53, 54. With the help of these frame-like rests, the microscope slides are reliably held by the slide tray 50 and have a fixed positon within the framework of the slide tray 50.

The slide tray 50 has ten cavities 55, with only one of them being provided with a reference numeral for clarity of illustration. In the exemplary embodiment of Figure 4, a magnetic or ferromagnetic element is provided in each of the ten cavities 55. In particular, a ferromagnetic element, such as a small iron cylinder, may be press-fit into each of the ten cavities 55. The ferromagnetic elements may interact with one ore more magnets that may be provided at the table 14 of the digital microscope 10 and/or at the turntable 24 of the slide tray input module 20 and/or at the turntable 34 of the slide tray output module 30 and/or at the slide tray holding wall 44 of the slide tray buffer 40. The magnetic interaction may contribute to a quick and reliable positioning of the slide tray 50 on the table 14 of the digital microscope and/or on the turntable 24 of the slide tray input module 20 and/or on the turntable 34 of the slide tray output module 30 and/or at a desired position within the slide tray buffer module 40. Due to their small size, the one or more magnets of the digital microscope 10 and/or the slide tray input module 20 and/or the slide tray output module 30 and/or the slide tray buffer module 40 are not shown in Figures 1 to 3. However, it is understood that they may be provided at any suitable location within the discussed components.

Returning to Figure 1, the distributed slide scanning system 2 comprises a tray moving assembly 60. The tray moving assembly 60 is configured to move slide trays between the components of the distributed slide scanning system 2, in particular to move slide trays between the components arranged in the sixteen unit shelf spaces 6. The tray moving assembly 60 provides for moving the slide trays in three dimensions within the distributed slide scanning system 2. The expression of moving the slide trays in three dimensions does not require the slide tray to be able to reach any of the geometric loci within the distributed slide scanning system 2, but entails the functionality of providing a slide tray to each of the components and taking a slide tray out of each of the components of the distributed slide scanning system 2.

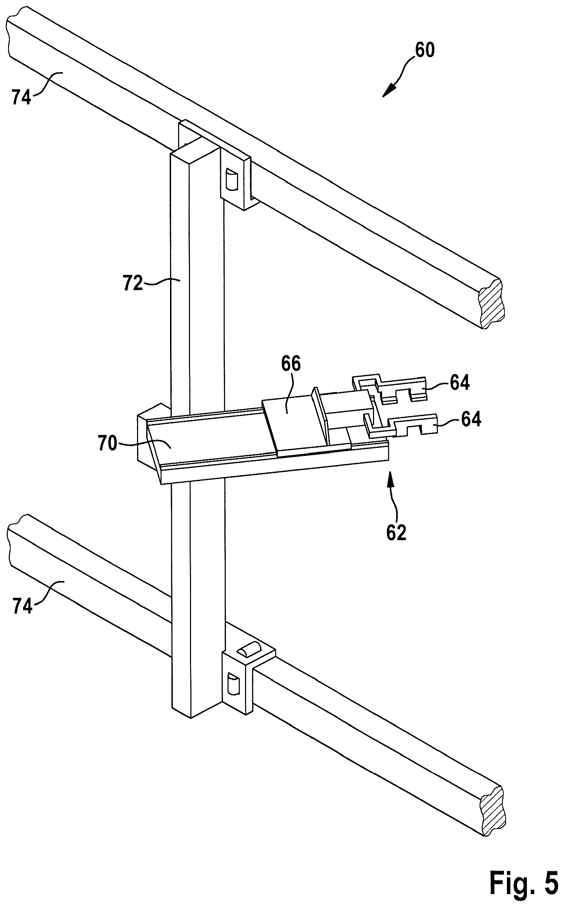

Figure 5 shows a tray moving assembly 60, as may be used in a distributed slide scanning system in accordance with exemplary embodiments of the invention, in a perspective view. In particular, the tray moving assembly 60 of Figure 5 may be used in the distributed slide scanning system 2 of Figure 1.

The tray moving assembly 60 comprises a gripper 62. The gripper 62 comprises a base 66 and two gripping arms 64. The gripping arms 64 are mounted to the base 66 and are movable with respect thereto. The two gripping arms 64 are shaped and spaced to handle an individual slide tray 50. In particular, the gripper 62 may bring the gripping arms 64 together and spread the gripping arms 64 for grabbing a slide tray and for releasing a slide tray, respectively.

The tray moving assembly 60 further comprises a rail assembly, which in turn comprises a first rail 70, a second rail 72, and two third rails 74. The base 66 of the gripper 62 is arranged on the first rail 70 and functions as a sled of the gripper 62 on the first rail 70. In this way, the gripper 62 is movable along the first rail 70. In the context of the distributed slide scanning system 2, the first rail 70 may be oriented such that a motion of the gripper 62 along the first rail 70 moves the gripping arms 64 into and out of the unit shelf spaces 6. This moving into and out of the unit shelf spaces 6 represents a first dimension of movement for the gripper 62. The orientation of the first rail 70 for moving the gripper 62 into and out of the unit shelf spaces is depicted in Figure 1.

The first rail 70 is mounted to the second rail 72 in a movable manner. The second rail 72 may be oriented in a substanially orthogonal direction with respect to the first rail 70, as shown in Figure 1. In the context of the distributed slide scanning system 2, the second rail 72 is a vertical rail. The first rail 70, including the gripper 62, is movable along the second rail 72 via a suitable motor. The moving of the first rail 70 along the second rail 72 represents a second dimension of movement for the gripper 62.

While the first rail 70 is shown as oriented in a substantially orthogonal direction with respect to the second rail 72 in Figure 1, the first rail 70 is shown in a somewhat pivoted / panned position in Figure 2. The first rail 70 may be mounted on the second rail 72 in a pivotable manner in a horizontal plane. The pivoting motion of the first rail 70 may allow for switching between a position that allows for grabbing / releasing the slide trays 50 in the unit shelf spaces 6, as shown in Figure 1, and a position that allows for more clearance with respect to the shelf 4, as shown in Figure 2, which may be used when moving the first rail 70 across larger distances in the distributed slide scanning system 2. Depending on the overall system set-up, the pivoting functionality may also be dispensed with.

The second rail 72 is mounted to two third rails 74 in a movable manner. The two third rails 74 are oriented in a substantially orthogonal manner with respect to the second rail 72 and with respect to the first rail 70. In the context of the distributed slide scanning system 2, the two third rails 74 are oriented in a substantially horizontal manner. The second rail 72 can be moved along the two third rails 74 via one or two suitable motors. The motion of the second rail 72 along the two third rails 74 represents a third dimension of movement for the gripper 62.

All of the first rail 70, the second rail 72, and the two third rails 74 are guide rails. The first rail 70 is a guide rail for the base 66 of the gripper 62. The second rail 72 is a guide rail for the first rail 70. The two third rails 74 a guide rails for the second rail 72.

The tray moving assembly 60, as for example described with respect to Figure 5, allows for moving an individual slide tray between the individual components of the distributed slide scanning system 2, as for example shown in Figure 1. For example, the tray moving assembly 60 may grab a slide tray from the turntable 24 of the slide tray input module 20 and place the slide tray on the table 14 of a digital microscope 10 or may place the slide tray into one of the slide tray buffer modules 40. Further, the tray moving assembly 60 may move an individual slide tray from the table 14 of a digital microscope 10 to a slide tray buffer module 40 or vice versa. Yet further, the tray moving assembly 60 may grab a slide tray from the table 14 of a digital microscope 10 or from a slide tray buffer module 40 and place the slide tray on the turntable 34 of the slide tray output module 30. In this way, the tray moving assembly 60 may freely move the slide trays 50 among the components of the distributed slide scanning system 2.

For controlling the components of the distributed slide scanning system 2, the distributed slide scanning system 2 may comprise a global system control unit and a component control unit for each of the plurality of digital microscopes 10, the at least one slide tray input module 20, the at least one slide tray output module 30, the at least one slide tray buffer module 40, and the tray moving assembly 60. The system control unit may exchange status messages with the component control units. The system control unit may in particular control the scheduling of slide tray moving operations via the tray moving assembly 60. For this purpose, the system control unit may receive status updates from the at least one slide tray input module 20, the at least one slide tray output module 30, and the at least one slide tray buffer module 40. Also, the system control unit may track which microscope slides within the distributed slide scanning system 2 have already been scanned. On the basis of this information, the system control unit may assign particular slide trays to particular digital microscopes for scanning and may control the operation of the tray moving assembly 60 for making the scheduled scanning possible.

Each of the system control unit and the plurality of component control units may be standalone control devices, such as dedicated computer or microprocessors, or may be software applications that run on a suitable computer / server. For example, it is possible that each of the plurality of digital microscopes 10 is associated with an individual computer that functions as a component control unit for the digital microscope in question. A further computer may be provided that controls the tray moving assembly 60, the at least one slide tray input module 20, the at least one slide tray output module 30, and the at least one slide tray buffer module 40. In particular, said further computer may contain a software application that acts as the system control unit and coordinates the tray moving assembly 60, the at least one slide tray input module 20, the at least one slide tray output module 30, and the at least one slide tray buffer module 40 on a high level. The further computer may further comprise software applications that act as component control units of the the tray moving assembly 60, the at least one slide tray input module 20, and the at least one slide tray output module 30 and that control the individual actions of these components.

The control devices and/or the computer(s) / server(s) that run the software applications may be arranged at any suitable location of the distributed slide scanning system 2. In particular, they may also be arranged in the shelf 4 or at suitable locations outside the shelf 4. While not being shown in the Figures, the skilled person understands that the control devices and/or the computer(s) / server(s) that run the software applications are integrated into the distributed slide scanning system 2 and are interconnected for the exchange of information.

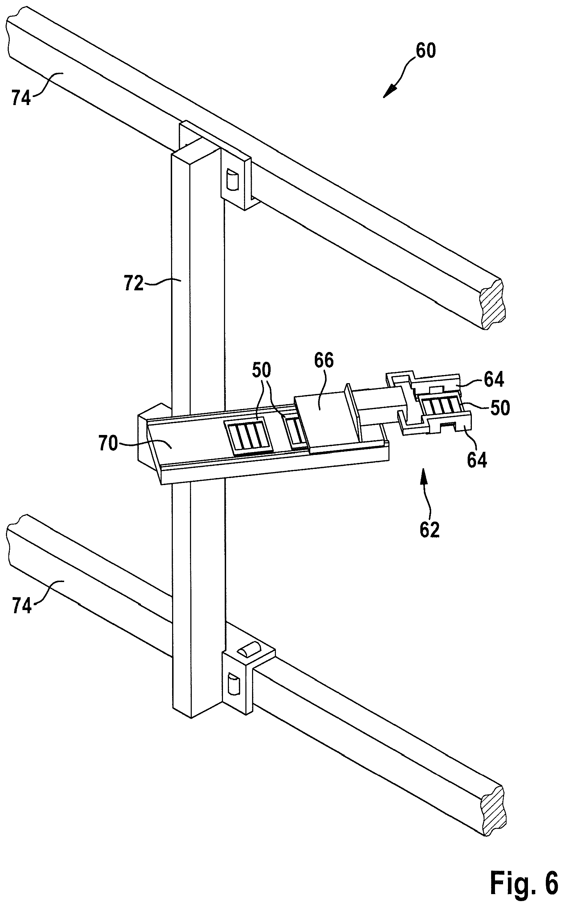

Figure 6 shows another exemplary tray moving assembly 60, as may be part of a distributed slide scanning system in accordance with exemplary embodiments of the invention, in a perspective view. The tray moving assembly may in particular be used in the distributed slide scanning system 2 of Figure 1. The tray moving assembly 60 of Figure 6 is very similar to the tray moving assembly 60 of Figure 5, with like components being denoted with the same reference numerals. For like components, reference is made to the description above.

A main difference between the tray moving assembly 60 of Figure 6 and the tray moving assembly 60 of Figure 5 is that the first rail 70 comprises two slide tray holding positions. In particular, when the gripper 62 is largely or fully retracted out of the unit shelf spaces 6 of the distributed slide scanning system 2, the gripping arms 64 may reach a position above the slide tray holding positions in the first rail 70. By releasing a slide tray 50 at these positions, a temporary storage of the slide trays 50 within the tray moving assembly 60 may be made possible. In Figure 6, two slide trays 50 are shown to be stored on the first rail 70. The slide tray holding positions within the first rail 70 provide for a further degree of freedom in scheduling the moving operations of the slide trays within the distributed slide scanning system. An overall even more efficient scheduling of the slide tray moving operations may be achieved.

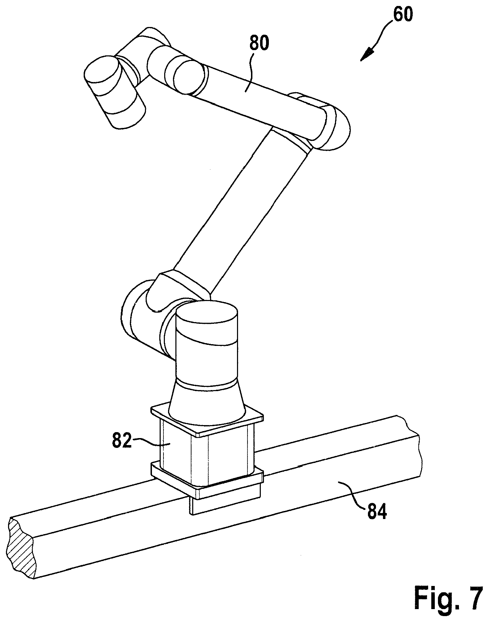

Figure 7 shows yet another exemplary tray moving assembly 60, as may be part of a distributed slide scanning system in accordance with exemplary embodiments of the invention. In particular, the tray moving assembly 60 of Figure 7 may be used in the distributed slide scanning system 2 of Figure 1.

The tray moving assembly 60 of Figure 7 comprises a robotic arm 80. The robotic arm 80 is a component that is inherently capable of moving its free end in three dimensions. By equipping the free end of the robotic arm 80 with a gripper, such as the gripper 62 shown in Figure 5 or Figure 6, the robotic arm is able to freely move a slide tray in three dimensions.

In the exemplary embodiment of Figure 7, the robotic arm 80 is mounted on a sled 82, which is in turn arranged on a track 84. Via a suitable motor, the sled 82 is movable along the track 84. This additional degree of freedom allows for extending the reach of the robotic arm 80 within the distributed slide scanning system.

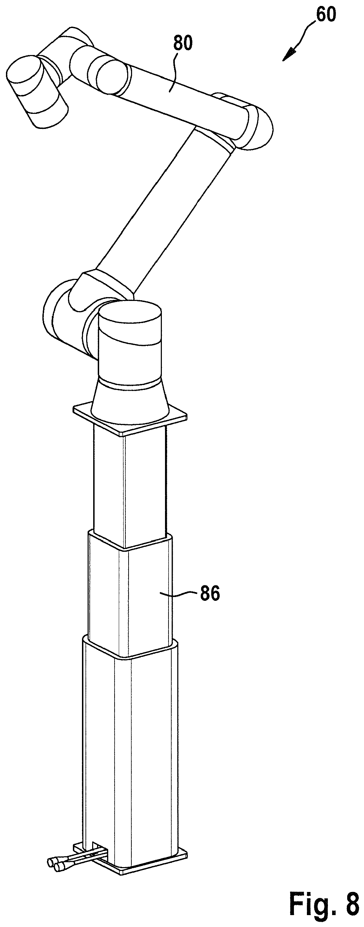

Figure 8 shows yet another exemplary tray moving assembly 60, as may be part of a distributed slide scanning system in accordance with exemplary embodiments of the invention. In particular, the tray moving assembly 60 of Figure 8 may be used in the distributed slide scanning system 2 of Figure 1.

The tray moving assembly 60 of Figure 8 comprises a robotic arm 80 that is identical to the robotic arm 80 of the tray moving assembly 60 of Figure 7. In the exemplary tray moving assembly 60 of Figure 8, the robotic arm 80 is arranged on a telescope support 86. The telescope support 86 is configured to lift and lower the robotic arm 80 in a vertical direction. In this way, the reach of the robotic arm 80 may be enhanced.

It is pointed out that the telescope support 86 of Figure 8 and the track 84 and sled 82 construction of Figure 7 may be combined. In particular, the telescope support 86 may be arranged on the sled 82. In this way, the reach of the robotic arm 80 may be increased both in a vertical dimension as well as in a horizontal dimension.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Distributed slide scanning system (2), comprising:
a plurality of digital microscopes (10), each of the plurality of digital microscopes (10) having a table (14) sized to hold at least one slide tray (50) and being configured to scan at least one microscope slide arranged in said at least one slide tray (50);
a distributed slide tray storage system, comprising at least one slide tray input module (20), at least one slide tray output module (30), and at least one slide tray buffer module (40), with each of the at least one slide tray input module (20), the at least one slide tray output module (30), and the at least one slide tray buffer module (40) being capable of holding a plurality of slide trays (50); and
a tray moving assembly (60), having a gripper (62) that is freely movable in three dimensions and that is configured to grab, move, and release an individual slide tray (50);
wherein the plurality of digital microscopes (10), the at least one slide tray input module (20), the at least one slide tray output module (30), the at least one slide tray buffer module (40), and the tray moving assembly (60) are arranged in such a way that the tray moving assembly (60) is able to move the individual slide tray (50) between the plurality of digital microscopes (10), the at least one slide tray input module (20), the at least one slide tray output module (30), and the at least one slide tray buffer module (40).

2. Distributed slide scanning system (2) according to claim 1, wherein the tray moving assembly (60) comprises a rail assembly (70, 72, 74), wherein the gripper (62) is mounted to the rail assembly (70, 72, 74), and wherein the gripper (62) is freely movable in three dimensions via the rail assembly (70, 72, 74).

3. Distributed slide scanning system (2) according to claim 1, wherein the tray moving assembly (60) comprises a robotic arm (80) and wherein the gripper (62) is mounted to the robotic arm (80).

4. Distributed slide scanning system (2) according to claim 3,
wherein the robotic arm (80) is arranged on a track (84) in a movable manner, wherein the robotic arm (80) is in particular fixed on a cart or sled (82) arranged on the track (84); and/or
wherein the robotic arm (80) is arranged on a telescope support (86).

5. Distributed slide scanning system (2) according to any of the preceding claims, wherein the distributed slide scanning system (2) has a plurality of unit shelf spaces (6), in particular a plurality of cubic unit shelf spaces, and wherein the at least one slide tray input module (20), the at least one slide tray output module (30), and the at least one slide tray buffer module (40) are each fitted into respective unit shelf spaces (6).

6. Distributed slide scanning system (2) according to claim 5, wherein the plurality of digital microscopes (10) are each fitted into respective unit shelf spaces (6).

7. Distributed slide scanning system (2) according to any of the preceding claims, having a system control unit, configured to coordinate the operations of the tray moving assembly (60) and the plurality of digital microscopes (10), taking into account at least the number of slide trays in the at least one slide tray input module (20) and the number of slide trays in the at least one slide tray buffer module (40).

8. Distributed slide scanning system (2) according to claim 7, wherein each of the plurality of microscopes (10), the at least one slide tray input module (20), the at least one slide tray output module (30), and the at least one slide tray buffer module (40) has a component control unit, coupled to the system control unit, wherein the plurality of microscopes (10), the at least one slide tray input module (20), the at least one slide tray output module (30), and the at least one slide tray buffer module (40) are configured to exchange status messages with the system control unit and/or among each other.

9. Distributed slide scanning system (2) according to any of the preceding claims, configured to place slide trays (50) in the at least one slide tray output module (30) in a sorted manner, in particular configured to organize slide trays (50) in the at least one slide tray output module (30) in at least one of patient-specific, examination-specific, and/or case-specific slide tray groups.

10. Distributed slide scanning system (2) according to any of the preceding claims, wherein at least one the slide tray input module (20) is configured to carry out microscope slide pre-scans, wherein the at least one the slide tray input module (20) is in particular configured to make a determination whether a particular microscope slide is to be scanned and/or which portions of a particular microscope slide are to be scanned, wherein the at least one slide tray input module (20) is further in particular configured to make said determination via artificial intelligence.

11. Distributed slide scanning system (2) according to any of the preceding claims, further comprising an external data connection, wherein the distributed slide scanning system is configured to perform at least one of the following functions:
export scans of microscope slides via the external data connection;
and/or
upon receiving a viewing command for a particular microscope slide via the external data connection, place a particular slide tray (50), holding the particular microscope slide, on the table (14) of one of the plurality of digital microscopes (10) and transmit a live view of the particular microscope slide via the external data connection;
and/or
re-scan a particular microscope slide or a portion of a particular microscope slide, with the re-scan of the particular microscope slide or the portion of the particular microscope slide being carried out with an adapted magnification and/or an adapted focus, as compared to a previous scan, wherein the adapted magnification and/or the adapted focus is in particular based on a user command or based on a machine-based evaluation of the previous scan, such as an evaluation of the previous scan via artificial intelligence.

12. Distributed slide scanning system (2) according to any of the preceding claims, wherein at least one of the plurality of digital microscopes (10) comprises at least one microscope-side magnet, arranged at the table (14) and configured to pull at least one magnetic or ferromagnetic element within a slide tray (50) into a predefined position on the table (14).

13. Combination of a distributed slide scanning system (2) according to claim 12 and a magnetic or ferromagnetic slide tray (50).

14. Combination according to claim 12,
wherein the magnetic or ferromagnetic slide tray (50) has at least one magnetic or ferromagnetic element embedded into the slide tray (50),
wherein the magnetic or ferromagnetic slide tray (50) is in particular made by additive manufacturing or by injection molding around the at least one magnetic or ferromagnetic element and/or wherein the magnetic or ferromagnetic slide tray (50) in particular comprises at least one cavity (55), into which the at least one magnetic or ferromagnetic element is fitted.

15. Method of operating a distributed slide scanning system (2) according to any of the preceding claims, comprising at least one of the following:
grabbing an individual slide tray (50) from a slide tray input module (20) and placing the individual slide tray (50) on the table (14) of a particular one of the plurality of digital microscopes (10) or into a particular one of the at least one slide tray buffer module (40);
grabbing an individual slide tray (50) from the table (14) of a particular one of the plurality of digital microscopes (10) and placing the individual slide tray (50) into a particular one of the at least one slide tray buffer module (40);
grabbing an individual slide tray (50) from a particular one of the at least one slide tray buffer module (40) and placing the individual slide tray (50) on the table (14) of a particular one of the plurality of digital microscopes (10); and
grabbing an individual slide tray (50) from the table (14) of a particular one of the plurality of digital microscopes (10) or from a particular one of the at least one slide tray buffer module (40) and placing the individual slide tray (50) into a particular one of the at least one slide tray output module (30).
